# FASCICULE DE BREVET EUROPEEN

(11) **EP 2 548 076 B1**
(45) Date de publication et mention de la délivrance du brevet: **28.05.2014**
(21) Numéro de dépôt: 11715948.3
(22) Date de dépôt: 18.03.2011
(51) Int. Cl.: G02F 1/1343, G02F 1/29, G02B 27/22

(54) **DISPOSITIF DE VARIATION OPTIQUE, SON UTILISATION ET PROCÉDÉ DE SA FABRICATION.**
OPTISCHE ÄNDERUNGSSVORRICHTUNG, IHRE VERWENDUNG UND VERFAHREN ZU IHRER HERSTELLUNG
OPTICAL VARIATION DEVICE, ITS USE AND METHOD OF MANUFACTURING IT

(30) Priorité: 19.03.2010 FR 1001091
(43) Date de publication de la demande: 23.01.2013
(73) Titulaire: Evosens, 29280 Plouzane (FR)
(72) Inventeur: FRAVAL, Nicolas, F-29200 Brest (FR); DE BOUGRENET DE LA TOCNAYE, Jean Louis, F-29820 Guilers (FR); BERIER, Frédéric, F-PLOUARZEL 29810 (FR)
(74) Mandataire: Poupon, Michel
(86) Numéro de dépôt international: PCT/FR2011/050563
(87) Numéro de publication internationale: WO 2011/114076

(56) Documents cités:
- EP-A1- 0 411 975
- EP-A1- 1 785 991
- US-A- 5 493 427
- HIKMET R ET AL: "Study of light distribution through liquid crystal (LC) lens arrays", JOURNAL OF APPLIED PHYSICS, AMERICAN INSTITUTE OF PHYSICS. NEW YORK, US LNKD- DOI:10.1063/1.2830711, vol. 103, no. 1, 14 janvier 2008 (2008-01-14), pages 13111-13111, XP012108570, ISSN: 0021-8979
- FRAVAL N ET AL: "Electrically tunable liquid-crystal wave plate using quadripolar electrode configuration and transparent conductive polymer layers", APPLIED OPTICS, OPTICAL SOCIETY OF AMERICA, US LNKD- DOI:10.1364/AO.48.005301, vol. 48, no. 28, 1 octobre 2009 (2009-10-01), pages 5301-5306, XP001549074, ISSN: 0003-6935 [extrait le 2009-09-21]
- DRUMMOND JAMES P ET AL: "Enhanced electro-optic poling in guest-host systems using conductive polymer-based cladding layers", 18 janvier 1999 (1999-01-18), APPLIED PHYSICS LETTERS, AIP, AMERICAN INSTITUTE OF PHYSICS, MELVILLE, NY, US LNKD- DOI:10.1063/1.123073, PAGE(S) 368 - 370, XP012023055, ISSN: 0003-6951 page 368, colonne de droite - page 369, colonne de droite; figure 1
- KOWEL S T ET AL: "Focusing by electrical modulation of refraction in a liquid crystal cell", APPLIED OPTICS, OPTICAL SOCIETY OF AMERICA, US LNKD- DOI:10.1364/AO.23.000278, vol. 23, no. 2, 15 janvier 1984 (1984-01-15), pages 278-289, XP002573297, ISSN: 0003-6935
- VDOVIN G V ET AL: "Modal liquid crystal wavefront correctors", BULLETIN OF THE RUSSIAN ACADEMY OF SCIENCES. PHYSICS ALLERTON PRESS INC. USA, vol. 72, no. 1, janvier 2008 (2008-01), pages 71-77, XP002595102, ISSN: 1062-8738

## Description

La présente invention porte sur des dispositifs de variation optique permettant de contrôler la propagation de la lumière et d'améliorer les qualités optiques d'une image visionnée par un appareil comportant un tel dispositif.

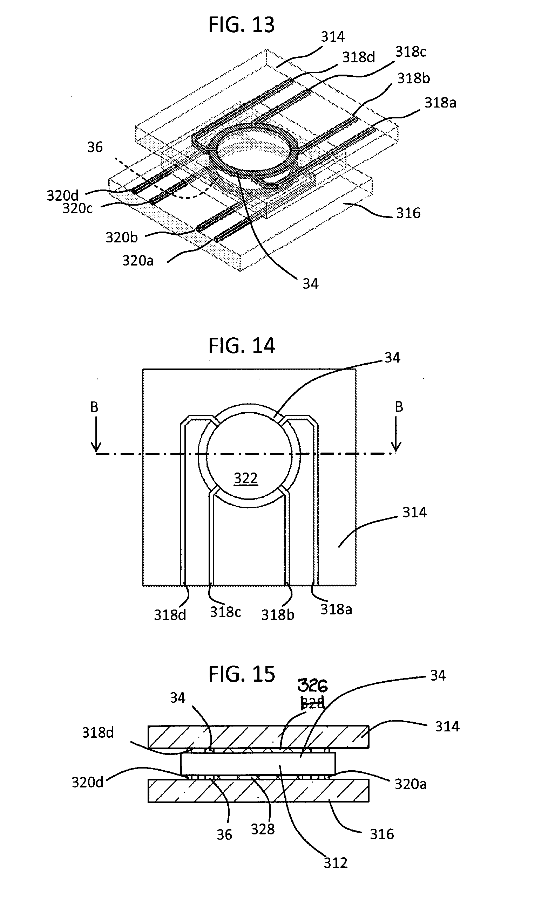

Plus particulièrement, elle concerne un dispositif de variation optique tel que défini dans la revendication 1 et illustré sur les figures 13 à 15.

Il est connu du document WO 2009/153764 un dispositif du type décrit précédemment. Plus particulièrement ce document décrit l'utilisation d'un matériau sensible aux fréquences, qui lorsqu'il est soumis à des signaux de commande de différentes fréquences modifie sa conductivité. Il est alors possible de former une lentille virtuelle dans l'élément à cristal liquide dont la focalisation peut être modifiée.

Il est connu aussi de la publication « lentilles modales » [Naumov ; Optic Letters, 23(13) :992-994, 1998] l'utilisation d'un matériau faiblement conducteur répartit dans l'ouverture optique de sorte à contrôler la distribution de tension des bords vers le centre de l'ouverture optique en modulant la fréquence des signaux de commande.

Ce type de lentilles, dites lentilles modales, offre l'avantage de présenter une focale variable qui est rapidement contrôlable par de simples moyens électriques en appliquant un signal de tension aux électrodes, le signal pouvant présenter différentes fréquences. On obtient une lentille convergente dont la focalisation est réalisée sur un point de l'axe optique.

Toutefois ce type de lentille présente une possibilité de variation de la distance focale le long de l'axe optique, en fonction de la fréquence et de la tension de commande mais elle ne permet pas d'obtenir un contrôle en trois dimensions du point focal permettant de décaler l'orientation du faisceau optique et ainsi d'améliorer la plage du balayage angulaire du dispositif.

Le but de la présente invention est de pallier ces inconvénients, de proposer un dispositif de variation optique permettant de faire varier la phase optique de sorte à améliorer les qualités optiques de l'image.

A cet effet le dispositif de variation optique tel que décrit précédemment est caractérisé par les dispositions définies dans la partie caractérisante de la revendication 1; le préambule de cette revendication est divulgué dans l'article "Low aberrations symmetrical adaptive modal liquid crystal lens with short focal lengths" de N. Fraval et al., Applied Optics, vol. 49, numéro 15, pages 2778-2783.

Grâce à ces dispositions, l'invention offre la possibilité de déséquilibrer le champ électrique entre les électrodes et donc de décaler l'orientation du faisceau optique. Ainsi des signaux présentant des tensions et des fréquences différentes peuvent être appliqués afin de générer des profils surfaciques de potentiel électrique plus complexes qui se traduisent par des formes de front d'ondes asymétriques et complexes.

La présente invention peut aussi servir comme solution correctrice d'aberrations ou à l'inverse, génératrice de déformation du front d'onde selon l'application visée et les effets souhaités.

De plus grâce à l'utilisation d'un matériau suffisamment résistif, supérieur à 10MΩ/carré pouvant recevoir des signaux hautes fréquences, et dont la résistance surfacique est répartie de manière uniforme dans la couche dudit matériau, cela répond aux problèmes des couches de matériau utilisées dans l'art antérieur. En effet les matériaux de l'art antérieur posent des problèmes d'uniformité de la répartition de leur résistance surfacique et ne permettent pas d'obtenir un gradient de champ électrique pour des lentilles de pupilles inférieures à 5mm. Grâce aux caractéristiques énoncées ci-dessus, le dispositif est adapté à être utilisé pour des lentilles d'ouvertures optiques de très petits diamètres, notamment inférieurs à 2 mm.

Selon d'autres caractéristiques :
- la couche matériau remplissant l'ouverture optique est composée d'un mélange de poly-3,4-éthylènedioxythiophène, polystyrènesulfonate et d'alcool polyvinylique. Ce matériau présente l'avantage d'obtenir une couche de matériau résistif acceptant les signaux hautes fréquence et dont la conductivité est répartie de manière uniforme dans la couche dudit matériau. De plus il permet de réaliser le dispositif de variation optique selon l'invention avec un procédé de fabrication maîtrisable et répétable, et permet de mieux contrôler les aberrations.
- Les axes délimitant les sous-électrodes débouchent sur la circonférence de l'ouverture optique de sorte à délimiter entre eux des arcs de cercle de l'ouverture optique sensiblement de même longueur.
- le matériau comporte en outre un promoteur de résistance surfacique, tel que l'éthylène glycol, le diméthyl formamide, de sorte à augmenter la conductivité surfacique du matériau ;
- le matériau comporte un promoteur d'adhérence tel que du tétraéthoxysilane, de sorte à améliorer l'adhérence du matériau aux substrats ;
- le dispositif comprend une couche d'ancrage en un matériau adapté à contraindre le cristal liquide en position planaire ou homéotrope ;
- les sous électrodes sont des électrodes métalliques fines présentant sensiblement la forme d'une tige ;
- chaque première et deuxième électrodes est constitué de plusieurs sous-électrodes métalliques fines reliées d'une part à l'anneau résistif et d'autre part débouchant sur l'un des bords de la plaque de substrat.

L'invention porte aussi sur un ensemble optique comportant deux dispositifs de variations optiques empilés l'un sur l'autre de sorte que leurs directions d'ancrage soient perpendiculaires.

Selon d'autres caractéristiques :
- L'ensemble optique comporte deux dispositifs de variations optiques empilés l'un sur l'autre de sorte que leurs directions d'ancrage soient parallèles ;
- L'ensemble optique comporte plusieurs dispositifs de variation optique disposées en réseau dans un plan ;
- l'ensemble optique est utilisé en appliquant des signaux présentant les mêmes caractéristiques d'amplitude et de fréquence simultanément aux électrodes pour la commande des dispositifs de variation optique.
- l'ensemble optique est utilisé en appliquant des signaux présentant des caractéristiques d'amplitude, de phase et de fréquence différentes indépendamment aux électrodes pour la commande des dispositifs de variation optique.

La présente invention sera mieux comprise à la lecture de la description détaillée qui suit réalisée sur la base des dessins annexés dans lesquels :
- la figure 1 représente une vue schématique en perspective d'une lentille à cristal liquide utile pour comprendre l'invention,
- la figure 2 représente une vue de dessus de la lentille illustrée à la figure 1,
- la figure 3 représente une vue en coupe selon le plan A-A de la lentille illustrée à la figure 2,
- la figure 4 représente une vue en perspective des électrodes de la lentille illustrée sur les figures 1 à 3,
- la figure 5 représente une vue de dessus de la première électrode divisée en plusieurs parties,
- la figure 6 représente les variations de la distribution de tension pour différentes fréquences du signal de commande appliqué aux électrodes,
- Les figures 7 et 8 représentent respectivement les diagrammes de la résistance de la couche de matériau nécessaire en fonction du rayon de la lentille, et la variation de la focale en fonction de la fréquence du signal de commande ;
- Les figures 9 à 12 sont des vues similaires aux figures 1 à 4 d'un ensemble optique.
- La figure 13 représente une vue en perspective d'un mode de réalisation de l'invention.
   , tel que défini par la revendication 1 et illustré sur les figures 13 à 15.
- La figure 14 représente une vue de dessous du substrat selon ce mode de réalisation,
- La figure 15 représente une vue en coupe selon le plan B-B de la lentille illustrée à la figure 13,
- Les figures 16 à 18 représentent respectivement une vue en perspective, une vue de dessus et une vie en coupe selon le plan C-C d'un exemple,
- Les figures 19 et 20 représentent des schémas simplifiés d'un ensemble optique comportant plusieurs dispositifs selon l'exemple des figures 16 à 18.

La présente invention trouve son application dans le domaine de l'imagerie de sorte à mieux contrôler la qualité optique d'une image à visionner avec un appareil équipé du dispositif selon l'invention.

Le dispositif de variation optique 10 selon la présente invention, tel que défini par la revendication 1 et illustré sur sur les figures 13 à 15 est une lentille comportant un élément à cristal liquide 312 présentant des propriétés optiques contrôlant la propagation de la lumière. L'élément à cristal liquide 312 est constitué d'un cristal liquide, par exemple nématique présentant des molécules qui sont orientées initialement autour d'une même direction moyenne. Ces molécules présentent une anisotropie de la permittivité diélectrique et une biréfringence positive ou négative. Les molécules ont donc une faculté à s'orienter respectivement parallèlement ou perpendiculairement au champ électrique E qui leur est appliqué. Le cristal liquide 312 modifie la polarisation de la lumière.

Selon une variante de réalisation, il est possible d'utiliser un cristal liquide cholestérique en « phase bleue », qui permet le fonctionnement du dispositif en lumière non polarisée.

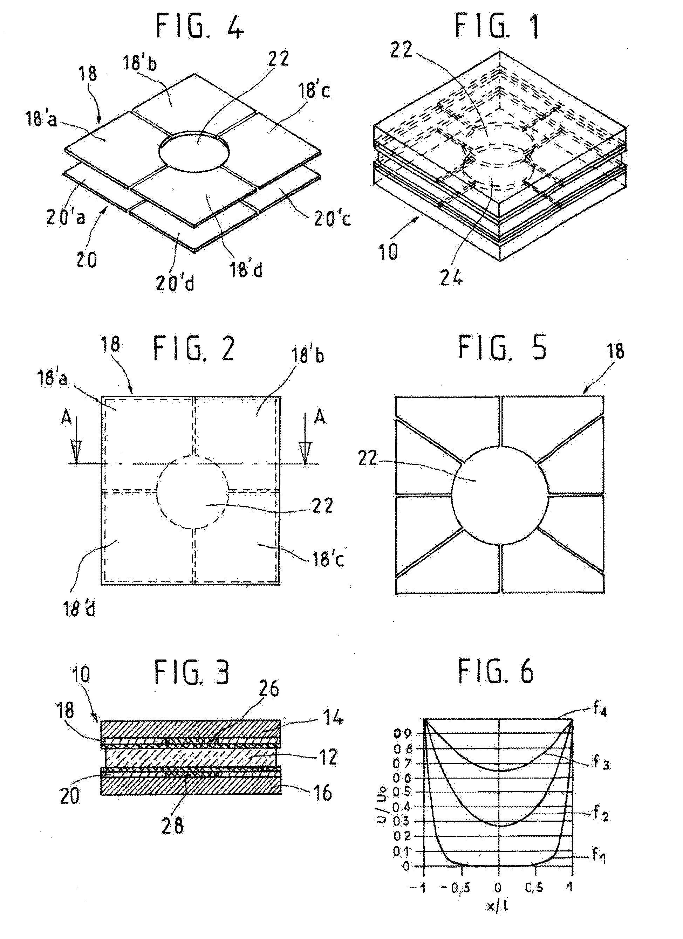

Le dispositif de variation optique comporte en outre deux substrats 314, 316 transparents (par exemple du verre, des matières plastiques, du quartz...). Chaque substrat est recouvert d'une couche métallique (Cr, Al, Au...) ou semi-conductrice (ITO...) opaque ou transparent formant une électrode de commande, qui définit sensiblement en son centre une ouverture circulaire appelée ouverture optique 322, qui présente un centre. Une couche d'un matériau résistif transparent 326, 328 est appliquée dans l'ouverture optique de chaque électrode de sorte à remplir cette dernière. La figure 3 illustre une vue en coupe d'un dispositif utile pour comprendre l'invention, qui fait apparaitre les différents éléments constituant le dispositif 10.

Pour des paramètres de couches résistives 26, 28 et de cristal liquide 12 déterminés, il est possible de contrôler la distribution de tension entre les électrodes en modulant la fréquence du signal qui leur est appliqué. Cette distribution est illustrée par la figure 6 représentant les courbes de variation de potentiel électrique au niveau de la couche résistive, pour différentes fréquences appliquées. Il est visible sur cette figure que plus la fréquence augmente (f4<f3<f2<f1), plus la distribution de la tension se creuse dans la zone du centre de la lentille.

Cette distribution de potentiel électrique contrôlable en fréquence permet de générer un gradient de champ électrique E variable dans le cristal liquide 12. La répartition du champ électrique E entraîne un gradient d'orientation des molécules du cristal liquide 12. Le cristal liquide 12 ainsi orienté est considéré par une lumière polarisée parallèlement à l'axe long des molécules comme un milieu à gradient d'indice. La lentille 10 formée par le dispositif présente donc des propriétés de focalisation contrôlables.

La couche de matériau 26, 28 présente des caractéristiques de résistivité en fonction du diamètre de l'ouverture optique comprises entre 10kΩ/carré et 10GΩ/carré. Elle est assimilée à une électrode résistive. De préférence le matériau 26, 28 présente une résistance surfacique supérieure à 10 MΩ/ carré et peut donc être utilisé pour des lentilles de très petite taille, par exemple dans les micro-caméra. Ce matériau 26, 28 permet de se libérer des contraintes de dimensions de la lentille et permet de réaliser de l'imagerie avec de très petites pupilles. Ce matériau 26, 28 peut être soumis à des signaux hautes fréquences, du fait de sa forte résistivité.

La couche de matériau 26, 28 remplissant l'ouverture optique 22, 24 présente une résistance surfacique répartie de façon très uniforme, ce qui engendre des propriétés de conduction du courant et de distribution du potentiel électrique homogène afin d'obtenir un front d'onde régulier et éviter les déformations du front d'onde dues à l'état de surface. Le matériau 26, 28 est adapté à être disposé de manière uniforme dans l'ouverture optique 22, 24 permettant d'obtenir une répartition homogène du potentiel. On entend par uniforme, la capacité du matériau à ne pas présenter de discontinuité de répartition de la résistance surfacique dans le volume ou la surface qu'il délimite.

Pour un matériau présentant une résistance surfacique supérieure à 10 MΩ/ carré, l'uniformité de la résistance électrique surfacique permettant d'obtenir la répartition uniforme du potentiel qui découle de l'application d'une tension aux bornes de la couche, implique les conditions suivantes : la solution initiale du matériau doit être homogène et la couche obtenue après recuit doit avoir une épaisseur constante.

La première condition est satisfaite en réalisant une solution sous agitation permanente puis filtrée avec un filtre de porosité inférieure à 1µm afin de garantir l'absence d'agrégats importants qui augmenteraient fortement la résistance surfacique locale. De plus la couche doit se répartir uniformément sur le substrat recouvert de l'électrode. Ce résultat peut être obtenu par la technique de dépôt à la tournette « spin-coating » et/ou par l'ajout d'un solvant tel que l'éthylène glycol qui permet de modifier l'organisation moléculaire du matériau et permet d'homogénéiser le dépôt sur la surface du substrat.

Comme indiqué précédemment, la couche du matériau résistif 26, 28 permet de contrôler la distribution de la tension et d'obtenir un effet de gradient de champ électrique dans la couche de cristal liquide en modulant la fréquence. Le dispositif 10 agit comme un dispositif passe-bas, dans lequel seuls les signaux basse-fréquence peuvent passer entre les électrodes 18, 20. Si les fréquences augmentent la tension va varier entre les deux électrodes 18, 20, faisant apparaître un gradient de champ électrique E. Plus la fréquence du signal est augmentée, moins la tension se propage vers le centre de la cellule et plus le gradient de champ électrique E est prononcé entre les bords et le centre de la pupille, permettant ainsi d'obtenir une plus grande plage de valeur de gradient de champ électrique E contrôlable.

Comme visible sur les figures 1 et 5 annexées, la première et la deuxième électrodes 18, 20 du dispositif 10 sont divisées en plusieurs parties formant des sous-électrodes 18'a, 18'b, 18'c, 18'd et/ou 20'a, 20'b, 20'c, 20'd adaptées à recevoir simultanément des potentiels différents. Les électrodes de commande 18, 20 de chaque substrat 14, 16 peuvent être partitionnées en 2, 3, 4, 6 ou 8 parties, comme visible sur la figure 5. Le partitionnement est réalisé de sorte que les axes délimitant les sous-électrodes débouchent sur la circonférence de l'ouverture optique et délimitent des arcs de cercle. Les axes délimitant les sous électrodes sont tels que l'électrode soit divisée en N sous-électrodes et la circonférence de l'ouverture optique soit divisée en N arcs de cercle de longueurs identiques. L'espacement entre chaque sous-électrode 18', 20' est supérieur ou égale à 1 µm. Cette distance est adaptée à la résistance du matériau résistif et aux tensions appliquées afin de ne pas détériorer localement le matériau.

Selon une variante, il est possible d'éliminer le matériau résistif dans l'espace entre les électrodes, par exemple en utilisant des techniques de gravure sèches, l'espace entre les électrodes pouvant alors être réduit à une dimension inférieure à 1 µm.

Selon l'invention (illustrée sur les figures 13 à 15), les deux électrodes 18, 20 sont divisées de manière identique et sont disposées en vis-à-vis de sorte que chaque sous-électrode 18' de la première électrode 18 soit disposée en face et soit associée à une sous électrode 20' identique de la deuxième électrode 20.

L'application de tensions de différentes valeurs sur les sous-électrodes 18', 20' permet de déséquilibrer la répartition du champ électrique E dans l'élément à cristal liquide 12. Il en résulte une déviation angulaire du faisceau optique transmis.

L'application de signaux électriques de tension et fréquence variables, mais identiques sur toutes les sous-électrodes 18', 20' métalliques permet de contrôler la position du point focal le long de l'axe optique, tel que la fonction optique soit celle d'une lentille convergente. Le profil de phase correspondant est celui d'une calotte sphérique, dont le rayon de courbure peut varier.

Lorsqu'on applique des signaux d'amplitude et de fréquences différentes sur chaque couple de sous-électrodes 18', 20' superposées, cela permet de dévier le point focal de l'axe optique dans un plan perpendiculaire à l'axe optique. Cela permet de décaler le sommet de la calotte sphérique citée précédemment. Il est ainsi possible d'avoir un contrôle en trois dimensions de la calotte sphérique formant la lentille.

Lorsqu'on applique un signal différent, issu d'une combinaison de fréquences, sur chaque couple de sous-électrodes 18', 20', cela permet de générer des profils complexes non uniformes engendrant un profil de phase correspondant à celui d'un calotte déformée présentant une surface complexe avec des creux, des bosses, non continument variable. Ce type de lentille est notamment utilisé pour la mise en forme de faisceau laser, et la correction d'aberrations optiques.

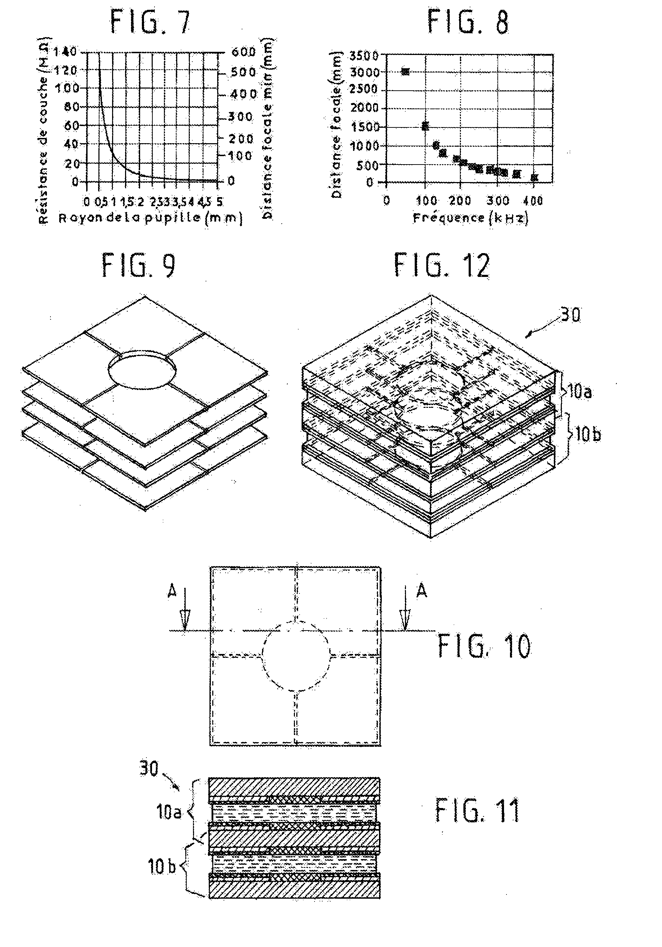

Les figures 7 et 8 illustrent respectivement les courbes de la résistance du matériau nécessaire en fonction du rayon de la lentille, et la courbe de la variation de la focale en fonction de la fréquence des signaux de commande. Il est visible sur ces figures que pour des lentilles de très petits diamètres (< 0,5mm) le matériau doit présenter une résistance élevée et que des lentilles de faible diamètre présentent une distance focale très petite. De plus la figure 8 montre que pour une distance focale très petite, la fréquence des signaux peut être très élevée (> 400kHz) pour obtenir une variation de la focale.

L'association de deux électrodes 18, 20 partitionnées avec un matériau 26, 28 très résistif permet de se libérer des contraintes de dimensions de la lentille, et permet de réaliser de l'imagerie avec de très petites pupilles, dont le diamètre est inférieur à 2mm en contrôlant en trois dimensions le point focal.

La lentille 10 selon l'invention, illustrée sur les figures 13 à 15, permet d'améliorer la stabilisation d'image et peut être utilisée, par exemple en tant qu'élément électro-actif d'un objectif imageur. Il peut aussi servir à la mise en forme de faisceau laser ou dans toute application qui nécessite des lentilles optiques à focales variables. L'association des lentilles à focale variable et de déviation de faisceau permet d'obtenir un dispositif autofocus à correction angulaire miniature, cette association est recherchée pour réaliser des micro caméras et des têtes d'endoscopes adaptatives.

Selon un mode de réalisation préféré, le matériau 26, 28 dans l'ouverture optique peut être de type polymère conducteur transparent : PEDOT-PSS, polyaniline, polypyrrole... Par exemple, le matériau 26, 28 disposé entre les électrodes 18, 20 est composé d'un mélange de poly (-3, 4-éthylènedioxythiophène) polystyrènesulfonate et d'alcool polyvinylique. Ce matériau 26, 28 est adapté à être disposé en couche uniforme nécessaire à la répartition homogène du potentiel et peut-être utilisé pour réaliser des lentilles modales à cristaux liquides de diamètres compris entre 0,5 et 10 mm présentant de faibles aberrations (λ/20) et de courtes focales (1 mm à l'infini).

De plus il présente des propriétés suffisamment résistives pour supporter des signaux présentant de hautes fréquences nécessaires pour de très petites pupilles de lentille.

Le dispositif selon l'invention est fabriqué de la manière suivante :

Chaque substrat 14, 16 est recouvert d'une couche métallique formant électrode 18, 20 telle que décrite précédemment. Les électrodes 18, 20 sont divisées en plusieurs sous-électrodes 18', 20' par gravure classique, par exemple par photolitographie ou ablation laser. L'ouverture optique 22, 24 délimitée par l'électrode 18, 20 reçoit la couche de matériau 26, 28 faiblement conducteur. Selon un mode de réalisation décrit précédemment, le matériau est constitué par un mélange de poly -3, 4-ethylenedioxythiophene polystyrenesulfonate (PEDOT-PSS) et d'alcool polyvinylique. (PVA).

Le matériau 26, 28 PEDOT-PSS est déposé sur les substrats par une technique de dépôt connu de l'ingénierie des polymères, telle que la centrifugation (spin-coating), ou la pulvérisation (spary-coating), ou encore par impression.

L'ensemble est ensuite séché à 100°C, par exemple en étuve.

Après séchage, un mélange de colle et de cales d'épaisseurs réparti autour de l'ouverture optique 22 d'un des substrats 14. Ces cales sont, par exemple, des billes de diamètre calibré, par exemple de 1 à 200 micromètre. Elles sont composées par exemple de plastique, de silice ou d'alumine. Selon une autre méthode, le calibrage de l'épaisseur consiste à graver des plots en résine photosensible.

Le second substrat 16 est alors superposé au premier substrat 14, de sorte que les ouvertures optiques 22, 24 de chacun des substrats 14, 16 soient alignées précisément en face l'une de l'autre, et soient espacées d'une distance déterminée par les cales. Chaque sous-électrode 20' de la deuxième électrode 20 est disposée en vis à vis de la sous-électrode 18' lui correspondant de la première électrode 18.

L'ensemble est scellé par exemple par durcissement de la colle, soit par polymérisation à Ultra violet, soit par séchage en étuve.

L'élément à cristal liquide 12 est infiltré dans la cavité formée entre les deux substrats soit par capillarité, soit par aspiration sous vide d'air. Puis un polariseur linéaire peut être positionné en entrée ou en sortie de lentille, orienté parallèlement à la direction d'ancrage. Ce polariseur permet de sélectionner la polarisation lumineuse orientée parallèlement à la direction d'ancrage.

Selon une variante de réalisation, la conduction de la couche PEDOT-PSS peut être augmentée en ajoutant un promoteur de résistance surfacique à la solution de PEDOT-PSS. Ce promoteur est par exemple de l'éthylène glycol (EG), du Diméthyl formamide (DMF). Grâce à ces dispositions il est possible de faire varier la résistance surfacique du matériau et ainsi d'adapter ses propriétés pour obtenir un gradient de champ électrique dans l'élément à cristal liquide quelque soit le diamètre de l'ouverture circulaire.

L'ajout de PVA permet de diminuer et d'uniformiser la résistance surfacique du matériau déposé, permettant ainsi une répartition encore plus homogène du potentiel dans le matériau.

L'adhérence du PEDOT-PSS aux substrats peut être renforcée en ajoutant un promoteur d'adhérence tel que du Tétraéthoxysilane.

Avant l'étape de mise en place des cales d'épaisseur, un traitement d'ancrage planaire peut être réalisé sur le matériau, si ce dernier supporte un tel traitement. Le traitement consiste en une action mécanique (par exemple brossage de la surface) qui permet d'aligner les molécules du cristal liquide parallèlement entre elles. En cas d'utilisation de cristal liquide à biréfringence positive, Les couches de PEDOT-PSS sont ensuite brossées avec un rouleau recouvert de nylon pour réaliser un ancrage planaire du cristal liquide, c'est-à-dire parallèle aux substrats. Les traitements d'ancrage peuvent être réalisés par d'autres méthodes, par exemple en déposant une autre couche de polymère photo-alignable.

Si le cristal liquide utilisé a une biréfringence négative, il faut réaliser un dépôt de matériau adéquat afin que l'ancrage du cristal liquide soit homéotrope, c'est à dire perpendiculaire aux substrats, par exemple des silanes.

Sinon le dispositif comprend une couche d'ancrage, c'est-à-dire une couche d'un autre matériau qui supporte le traitement d'ancrage (Poliymide, PVA...) est déposée sur l'électrode résistive et un traitement d'ancrage est réalisé de sorte à contraindre le cristal liquide en position planaire ou homéotrope.

Les techniques de fabrication énoncées ci-dessus sont facilement industrialisables. Toutes les étapes sont « wafer level », c'est-à-dire que ce sont des techniques de fabrication dédiées à la microélectronique. Le « wafer » est un disque de silicium ou de verre sur lequel on grave par photolithographie respectivement les composants électroniques (transistor, résistances...) ou optoélectronique (lentilles miniatures, OLED,...). Cela permet de hautement paralléliser les process et donc de gagner en rentabilité. Ces techniques de fabrication peuvent être utilisées et adaptées à des systèmes de production massivement parallèle.

Selon un mode de réalisation particulier, il est possible d'appliquer un matériau spécifique qui contraint le cristal liquide en position homéotrope, c'est à dire perpendiculaire aux substrats 14, 16.

Lorsque les molécules de cristal liquide sont orientées selon une direction inclinée par rapport à la polarisation de la lumière, la biréfringence, c'est à dire sa propriété de produire une double réfraction de la lumière, peut être négative ou positive. Dans le cas où le cristal liquide 12 présente une biréfringence négative, l'application de signaux électriques de tension et fréquence variables, mais identiques sur toutes les sous-électrodes 18', 20' permet de contrôler la position du point focal le long de l'axe optique tel que la fonction optique soit celle d'une lentille divergente.

Il est possible d'appliquer à cette lentille divergente des signaux d'amplitude et de fréquence différents entre chaque couple de sous-électrodes 18', 20' superposées, permettant de dévier le point focal optique dans un plan perpendiculaire à l'axe, comme cela a été décrit précédemment.

L'invention porte aussi sur un ensemble optique 30 constitué de plusieurs dispositifs de variation optique 10a, 10b assemblés les uns aux autres.

Selon un premier mode de réalisation, visible sur les figures 9 à 12, il est possible de superposer plusieurs dispositifs de variation optique 10a, 10b, chacun d'eux étant réalisé selon le mode de réalisation illustré sur les figures 13 à 15, en alignant le centre de leurs ouvertures.

Selon une première variante du premier mode de réalisation, les lentilles empilées sont convergentes et leurs directions d'ancrage, c'est-à-dire leur direction d'orientation du cristal liquide, sont perpendiculaires l'une par rapport à l'autre.

Lorsqu'on applique sur chaque lentille de cette première variante des signaux de commande identiques, l'ensemble ainsi formé devient une lentille à focale variable insensible à la polarisation. Dans ce cas le polariseur doit être enlevé. De plus l'espace entre les deux dispositifs doit être largement inférieur à la focale minimale.

Lorsqu'on applique sur chaque lentille de cette première variante des signaux de commande différents, l'ensemble ainsi formé devient deux lentilles à focales variables. La lumières se sépare en deux parties de polarisations perpendiculaires entre elles (parallèles aux ancrages de chaque lentille) et focalisée en deux points différents.

Selon une deuxième variante du premier mode de réalisation, dans le cas où les lentilles empilées sont convergentes et leurs directions d'ancrage parallèles, et que les signaux appliqués sur chaque lentille sont différents, l'ensemble ainsi formé devient deux lentilles à focales variables, une focale différente par lentille, mais agissant sur la même polarisation. Un seul polariseur est nécessaire pour les deux lentilles.

Selon une troisième variante de réalisation, dans le cas où l'ensemble comporte une lentille convergente associée à une lentille divergente dans un objectif d'imagerie, l'ensemble acquiert les propriétés d'un zoom miniature.

Selon un deuxième mode de réalisation, plusieurs dispositifs selon l'invention, c'est-à-dire tels qu'illustrés sur les figures 13 à 15, peuvent être associés et mis en réseau dans un plan, selon un pas défini.

Selon une première variante du deuxième mode de réalisation, les dispositifs de variations optiques peuvent être pilotés simultanément, c'est-à-dire que la phase, l'amplitude et la fréquence des signaux appliqués sur chaque dispositif sont égales.

Selon une deuxième variante du deuxième mode de réalisation, les dispositifs sont pilotés indépendamment, c'est-à-dire que la phase, l'amplitude et la fréquence des signaux appliqués sur chaque dispositif sont indépendantes.

La mise en réseau de plusieurs dispositifs permet de sonder la matière et d'imager des surfaces en champ proche.

La structure du dispositif de variation optique selon l'invention, utilisé dans les modes de réalisation précédents, est illustrée par les figures 13 à 15: la pupille résistive, formée par l'ouverture optique 322, est délimitée par un anneau résistif (34, 36).

L'anneau résistif (34, 36) est piloté par des sous-électrodes métallique fines (318a, 318b, 318c, 318d, 320a, 320b, 320c, 320d). Chaque sous-électrode (318a à 318d, 320a à 320d) présente la forme d'une tige reliée d'une part à l'anneau résistif (34, 36) de sorte à délimiter entre elles des arcs de cercle de l'anneau résistif (34, 36) sensiblement de même longueur. Tel qu'illustré sur les figures 13 à 15, le dispositif de variation optique comporte quatre sous-électrodes délimitant, d'une part, quatre arcs de cercle sensiblement égaux et débouchant d'autre part sur un même bord de la plaque de substrat sur lequel les sous-électrodes sont disposées.

L'anneau résistif (34, 36) permet d'uniformiser la répartition du potentiel électrique à la surface de la couche de matériau (326, 328) disposé dans l'ouverture optique. L'anneau résistif (34, 36) permet de linéariser la tension électrique entre chaque électrode métallique fine (318a à 318d, 320a à 320d). Il permet d'améliorer la continuité électrique entre les sous-électrodes (318a à 318d, 320a à 320d) tout en garantissant une propagation électrique sur chaque arc de l'anneau résistif, entre les sous-électrodes.

Le dispositif de variation optique selon l'invention assure la conduction du potentiel électrique dans les sous-électrodes (318a à 318d, 320a à 320d), une répartition linéaire de potentiel électrique dans l'anneau résistif (34, 36) et par conséquent une répartition homogène du potentiel dans la pupille. De plus il permet la modification de la répartition du potentiel électrique dans la pupille par modification de la fréquence de commande.

Ces dispositions sont obtenues si le dispositif de variation optique présente des sous-électrodes métalliques fines de résistance quasi-nulle, si l'anneau présente une résistance surfacique comprise entre 1 et 10kΩ/ carré, la résistance de la pupille présentant une résistance surfacique de l'ordre de plusieurs MΩ/carré. Ainsi lorsqu'on fait varier la fréquence du signal appliqué au dispositif, le changement de fréquence n'aura pas d'impact sur la répartition linéaire du potentiel sur l'anneau résistif, mais seulement un impact sur la répartition du potentiel dans la pupille.

Comme indiqué précédemment, la couche de matériau (326, 328) utilisé dans la pupille peut être de type conducteur transparent : PEDOT-PSS, polyaniline, polypyrrolle etc.... Le matériau ne doit pas forcément être transparent car il délimite l'ouverture optique.

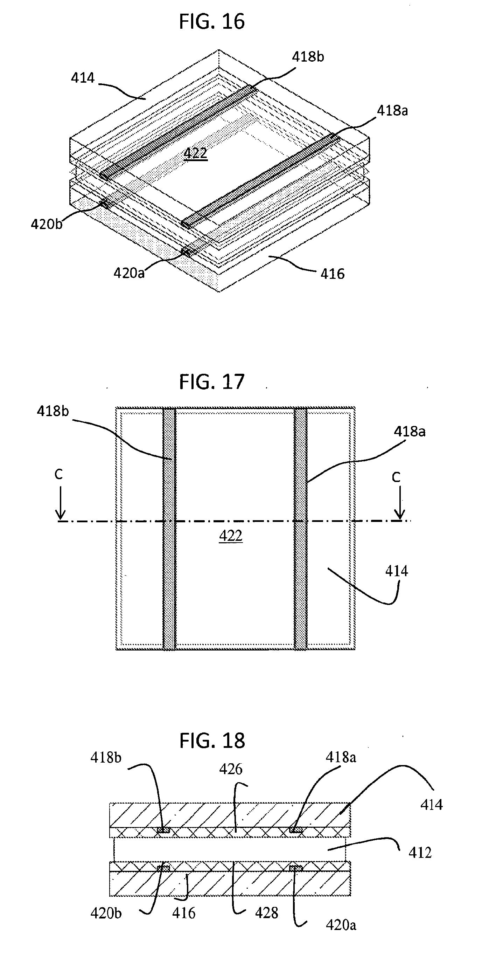

Le nombre de sous-électrodes du dispositif selon l'invention n'est donné qu'à titre d'exemple et est non limitatif. Selon un exemple illustré sur les figures 16 à 19, un dispositif de variation optique 410 comporte sur chaque plaque de substrat 414, 416 une électrode 418, 420 divisées en deux sous-électrodes 418a, 418b, 420a, 420b rectilignes et disposées parallèlement. Les sous-électrodes d'une même plaque de substrat 414, 416 délimitent une ouverture optique 422, 424 de forme sensiblement rectangulaire définissant une lentille cylindrique. Les sous-électrodes 418a, 418b, 420a, 420b sont adaptées à recevoir simultanément des potentiels différents. Cette configuration permet d'associer une fonction de lentille cylindrique à focale variable à une fonction de prisme à angle variable.

L' application de tensions de différentes valeurs sur les sous-électrodes 418a, 418b, 420a, 420b permet de déséquilibrer la répartition du champ électrique E dans l'élément à cristal liquide 412. Il en résulte une déviation angulaire du faisceau optique transmis selon l'axe perpendiculaire aux axes des électrodes.

L'application de signaux électriques de tension et fréquence variables, mais identiques sur toutes les sous-électrodes 418a, 418b, 420a, 420b métalliques d'un même substrat 414, 416 permet de contrôler la position de la ligne focale le long de l'axe optique, tel que la fonction optique soit celle d'une lentille cylindrique convergente. Le profil de phase correspondant est celui d'une calotte ou voûte cylindrique, dont le rayon de courbure peut varier.

Lorsqu'on applique des signaux d'amplitude et de fréquences différentes sur chaque couple de sous-électrodes superposées (418a, 420a) et (418b, 420b), cela permet de dévier la ligne focale de l'axe optique dans un plan perpendiculaire à l'axe optique. Cela permet de décaler le sommet de la calotte cylindrique citée précédemment par rapport aux axes des sous-électrodes.

Lorsqu'on applique un signal différent, issu d'une combinaison de fréquences, sur chaque couple de sous-électrodes superposées (418a, 420a) et (418b, 420b), cela permet de générer des profils complexes non uniformes engendrant un profil de phase correspondant à celui d'un calotte déformée présentant une surface complexe avec des creux, des bosses, non continument variable. Ce type de lentille est notamment utilisé pour la mise en forme de faisceau laser, et la correction d'aberrations optiques.

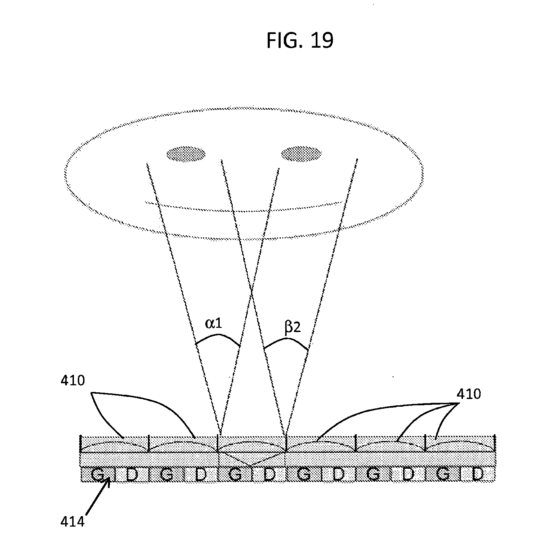

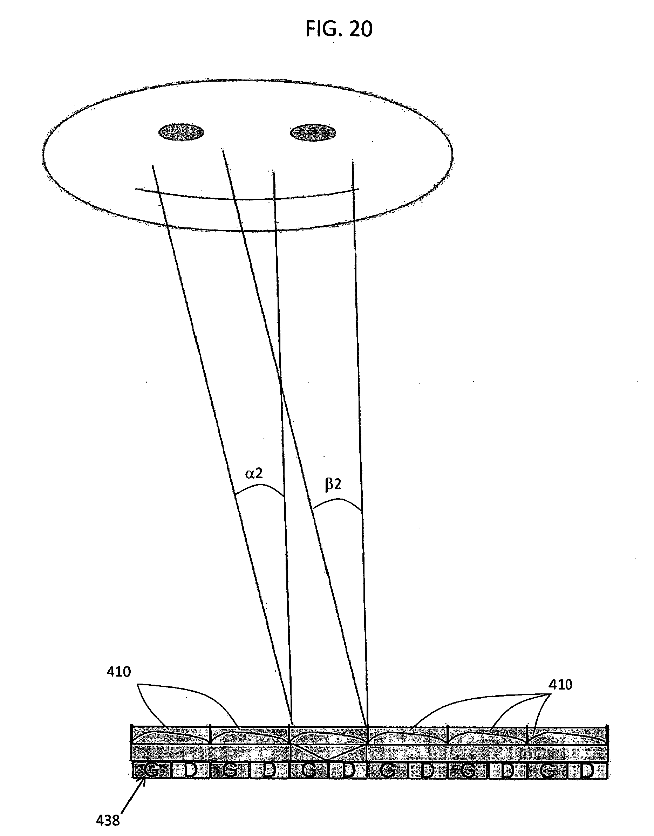

Un ensemble optique comportant des dispositifs selon l'exemple des figures 16 à 18 illustré par les figures 19 et 20. Dans cet ensemble optique, il est disposé plusieurs dispositifs de variation optique 410 de sorte que les ouvertures optiques 422, 424 rectangulaires peuvent être réalisées suivant un réseau. La fonction optique ainsi réalisée est un réseau lenticulaire ajustable.

Chaque élément du réseau peut être commandé par un moyen de commande individuellement ou globalement de manière identique aux voisins. Un tel réseau lenticulaire variable peut être combiné avec un écran lcd à cristaux liquides 438 classique pour réaliser une fonction d'affichage autostéréoscopique (c'est-à-dire une projection restituant une impression de relief en trois dimensions, sans nécessiter de lunettes), commutable (pour passer d'un affichage simplement 2D à un affichage 3D), et pour pouvoir ajouter une fonction d'adaptation de l'affichage 3D à la position de l'observateur. En effet les affichages 3D autostéréoscopiques connus utilisant le principe du masque de barrière de paralaxe ou le principe du réseau lenticulaire, ne permettent pas de suivre l'observateur, l'écran doit être regardé à distance fixe, et à angle fixe par rapport à l'écran.

Un réseau de lentilles cylindriques suivant l'exemple permettra d'adapter l'affichage 3D à la position de l'observateur, à condition de détecter sa position définie par la distance d1, d2 et la position angulaire (α1, β1, α2, β2) de l'observateur par rapport à l'écran 438 par un moyen de détection spécifique connu de l'homme du métier. Un moyen de commande du dispositif permet d'appliquer des signaux électriques de tensions et de fréquences adaptées à modifier la focale et la fonction de prisme des dispositifs de variation optique 410 de sorte à régler la direction du faisceau lumineux vers l'observateur.

Ainsi pour s'adapter à la distance de l'observateur, on définira la focale de la lentille cylindrique. Et pour s'adapter à la position angulaire de l'observateur par rapport à l'écran, on ajoutera une fonction de prisme par décalage de l'axe optique de la lentille cylindrique.

L'invention n'est nullement limitée aux modes de réalisation décrits et détaillés qui ne sont donnés qu'à titre d'exemple: l'invention est définie par les revendications.

## Revendications

1. Dispositif de variation optique (10) permettant de contrôler la propagation de la lumière comprenant :
- un élément à cristal liquide (312) présentant des propriétés optiques contrôlant la propagation de la lumière,
- deux plaques de substrat (314, 316) disposées de part et d'autre de l'élément à cristal liquide (312), les deux plaques de substrat (314, 316) étant recouvertes respectivement d'une première et d'une deuxième électrodes de commande, chaque électrode délimitant un orifice formant une ouverture optique (322) de forme sensiblement circulaire,
le dispositif comportant en outre une couche d'un matériau (326, 328) remplissant l'ouverture optique (322) délimitée par chaque électrode,
le matériau présentant une résistance surfacique répartie de manière uniforme dans la couche et comprise entre 10kΩ/carré et 10GΩ/carré, le dispositif étant **caractérisé en ce que** la première électrode et la deuxième électrode sont divisées de manière identique et en vis-à-vis en plusieurs parties formant des sous-électrodes (318a, 318b, 318c, 318d, 320a, 320b, 320c, 320d) adaptées à recevoir simultanément des potentiels différents, et **en ce que** sur chaque plaque de substrat (314, 316) un anneau résistif (34, 36) délimite l'ouverture optique et est commandé par les sous-électrodes.

2. Dispositif de variation optique selon la revendication précédente,
dans lequel le matériau présente une résistance surfacique répartie de manière uniforme dans la couche de ce dernier, la résistance surfacique étant supérieure à 10MΩ/carré.

3. Dispositif de variation optique selon la revendication précédente,
dans lequel la couche de matériau (326, 328) remplissant l'ouverture optique (322) est composée d'un mélange de poly(3, 4-éthylènedioxythiophène), polystyrènesulfonate et d'alcool polyvinylique.

4. Dispositif de variation optique selon l'une des revendications précédentes, dans lequel les sous-électrodes sont délimitées par des axes qui débouchent sur la circonférence de l'ouverture optique de sorte à délimiter entre eux des arcs de cercle sensiblement de même longueur.

5. Dispositif de variation optique selon l'une des revendications précédentes, dans lequel les sous-électrodes sont des électrodes métalliques fines (318a à 318d, 320a à 320d) présentant sensiblement la forme d'une tige.

6. Dispositif de variation optique selon la revendication 5, dans lequel chaque première et deuxième électrodes est constitué de plusieurs sous-électrodes métalliques fines reliées (318a à 318d, 320a à 320d) d'une part à l'anneau résistif (34, 36) et d'autre part débouchant sur l'un des bords de la plaque de substrat (314, 316).

7. Dispositif de variation optique selon la revendication 3 et l'une des revendications 4 à 6, dans lequel le matériau (326, 328) comporte en outre un promoteur de résistance surfacique, tel que l'éthylène glycol, le diméthyl formamide, de sorte à augmenter la résistance surfacique du matériau.

8. Dispositif de variation optique selon l'une des revendications précédentes, dans lequel le matériau (326, 328) comporte un promoteur d'adhérence tel que du tétraéthoxysilane, de sorte à améliorer l'adhérence du matériau aux substrats.

9. Dispositif de variation optique selon l'une des revendications précédentes, lequel comprend une couche d'ancrage en un matériau adapté à contraindre l'élément à cristal liquide (312) en position planaire, ainsi définissant une direction d'ancrage planaire parallèle aux substrats (314, 316), ou homéotrope.

10. Ensemble optique (30) **caractérisé en ce qu'**il comporte deux dispositifs de variations optiques (10a, 10b) selon la revendication précédente empilés l'un sur l'autre de sorte que leurs directions d'ancrage planaires soient perpendiculaires.

11. Ensemble optique (30) **caractérisé en ce qu'**il comporte deux dispositifs de variations optiques (10a, 10b) selon la revendication 9 empilés l'un sur l'autre de sorte que leurs directions d'ancrage planaires soient parallèles.

12. Ensemble optique **caractérisé en ce qu'**il comporte plusieurs dispositifs de variation optique selon l'une des revendications 1 à 8 disposées en réseau dans un plan.

13. Utilisation d'un ensemble optique selon l'une des revendications 11 et 12, pour laquelle des signaux présentant les mêmes caractéristiques d'amplitude et de fréquence sont appliqués simultanément aux électrodes pour la commande des dispositifs de variation optique.

14. Utilisation d'un ensemble optique selon l'une des revendications 11 et 12, pour laquelle des signaux présentant des caractéristiques d'amplitude de phase et de fréquence différentes sont appliqués indépendamment aux électrodes pour la commande des dispositifs de variation optique.

15. Procédé de fabrication d'un dispositif de variation optique selon l'une des revendications 1 à 9 , **caractérisé en ce qu'**il comporte les étapes suivantes :
- mise à disposition de deux substrats transparents,
- dépôt sur chaque substrat d'une couche métallique formant respectivement une première et deuxième électrodes, chaque électrode délimitant un orifice formant une ouverture optique (322) de forme sensiblement circulaire,
- division de manière identique et en vis-à-vis de chacune des première et deuxième éléctrodes en plusieurs sous-électrodes par gravure classique,
- dépôt d'une couche d'un matériau (326, 328) remplissant l'ouverture optique (322) délimitée par chaque électrode sur les substrats (314, 316) par centrifugation, pulvérisation ou impression, le matériau présentant une résistance surfacique comprise entre 10 kΩ/carré et 10 GΩ/carré, délimitation de chacune ouverture (322) pour un anneau résistif (34, 36)
- séchage des substrats (314, 316) à 100°C, de préférence en étuve,
- réalisation d'un traitement d'ancrage planaire ou homéotrope,
- disposition de colles et de cales d'épaisseur autour de l'ouverture optique (322) du premier substrat (314),
- superposition du deuxième substrat (316) de sorte que les ouvertures optiques (322) soient disposées en vis-à-vis,
- scellage du dispositif (10) par durcissement de la colle par polymérisation ou par séchage en étuve,
- insertion d'un élément à cristal liquide (12) entre les deux substrats (314, 316) par capillarité ou par aspiration sous vide d'air,
- mise en place d'un polariseur linéaire en entrée ou en sortie du dispositif, orienté parallèlement à la direction d'ancrage dans le cas de traitement planaire.

## Patentansprüche

1. Optische Veränderungsvorrichtung (10), die es ermöglicht, die Ausbreitung des Lichts zu regeln, die enthält:
- ein Flüssigkristallelement (312) mit optischen Eigenschaften, die die Ausbreitung des Lichts regeln,
- zwei Substratplatten (314, 316), die zu beiden Seiten des Flüssigkristallelements (312) angeordnet sind, wobei die zwei Substratplatten (314, 316) von einer ersten bzw. zweiten Steuerelektrode bedeckt sind, wobei jede Elektrode eine eine im Wesentlichen kreisförmige optische Apertur (322) bildende Öffnung begrenzt,
wobei die Vorrichtung außerdem eine Schicht eines Materials (326, 328) aufweist, das die von jeder Elektrode begrenzte optische Apertur (322) füllt, wobei das Material einen gleichmäßig in der Schicht verteilten und zwischen 10kΩ/Quadrat und 10GΩ/Quadrat liegenden Flächenwiderstand aufweist, wobei die Vorrichtung **dadurch gekennzeichnet ist, dass** die erste Elektrode und die zweite Elektrode in gleicher Weise und einander gegenüber in mehrere Teile aufgeteilt sind, die Teilelektroden (318a, 318b, 318c, 318d, 320a, 320b, 320c, 320d) bilden, welche geeignet sind, um gleichzeitig unterschiedliche Potentiale zu empfangen, und dass auf jeder Substratplatte (314, 316) ein Widerstandsring (34, 36) die optische Apertur begrenzt und von den Teilelektroden gesteuert wird.

2. Optische Veränderungsvorrichtung nach dem vorhergehenden Anspruch, wobei das Material einen gleichmäßig in seiner Schicht verteilten Flächenwiderstand aufweist, wobei der Flächenwiderstand höher als 10MΩ/Quadrat ist.

3. Optische Veränderungsvorrichtung nach dem vorhergehenden Anspruch, wobei die die optische Apertur (320) füllende Materialschicht (326, 328) aus einer Mischung von Poly(3,4-Ethylendioxythiophen), Polystyrolsulfonat und Polyvinylalkohol zusammengesetzt ist.

4. Optische Veränderungsvorrichtung nach einem der vorhergehenden Ansprüche, wobei die Teilelektroden von Achsen begrenzt werden, die auf dem Umfang der optischen Apertur münden, um zwischen sich Kreisbögen von im Wesentlichen gleicher Länge zu begrenzen.

5. Optische Veränderungsvorrichtung nach einem der vorhergehenden Ansprüche, wobei die Teilelektroden dünne metallische Elektroden (318a bis 318d, 320a bis 320d) sind, die im Wesentlichen die Form einer Stange haben.

6. Optische Veränderungsvorrichtung nach Anspruch 5, wobei jede erste und zweite Elektrode aus mehreren dünnen metallischen Teilelektroden (318a bis 318d, 320a bis 320d) besteht, die einerseits mit dem Widerstandsring (34, 36) verbunden sind und andererseits an einem der Ränder der Substratplatte (314, 316) münden.

7. Optische Veränderungsvorrichtung nach Anspruch 3 und einem der Ansprüche 4 bis 6, wobei das Material (326, 328) außerdem einen Flächenwiderstandspromoter, wie Ethylenglycol, Dimethylformamid, aufweist, um den Flächenwiderstand des Materials zu erhöhen.

8. Optische Veränderungsvorrichtung nach einem der vorhergehenden Ansprüche, wobei das Material (326, 328) einen Haftpromoter wie Tetraethoxysilan aufweist, um die Haftung des Materials an den Substraten zu verbessern.

9. Optische Veränderungsvorrichtung nach einem der vorhergehenden Ansprüche, die eine Verankerungsschicht aus einem Material enthält, das geeignet ist, um das Flüssigkristallelement (312) in eine planare Stellung, wodurch eine planare Verankerungsrichtung parallel zu den Substraten (314, 316) definiert wird, oder homöotrope Stellung zu zwingen.

10. Optische Einheit (30), **dadurch gekennzeichnet, dass** sie zwei optische Veränderungsvorrichtungen (10a, 10b) nach dem vorhergehenden Anspruch aufweist, die so übereinander gestapelt sind, dass ihre planaren Verankerungsrichtungen lotrecht sind.

11. Optische Einheit (30), **dadurch gekennzeichnet, dass** sie zwei optische Veränderungsvorrichtungen (10a, 10b) nach Anspruch 9 aufweist, die so übereinander gestapelt sind, dass ihre planaren Verankerungsrichtungen parallel sind.

12. Optische Einheit, **dadurch gekennzeichnet, dass** sie mehrere optische Veränderungsvorrichtungen nach einem der Ansprüche 1 bis 8 aufweist, die netzförmig in einer Ebene angeordnet sind.

13. Verwendung einer optischen Einheit nach einem der Ansprüche 11 und 12, wobei Signale mit den gleichen Amplituden- und Frequenzmerkmalen zur Steuerung der optischen Veränderungsvorrichtungen gleichzeitig an die Elektroden angelegt werden.

14. Verwendung einer optischen Einheit nach einem der Ansprüche 11 und 12, wobei Signale mit unterschiedlichen Phasenamplituden- und Frequenzmerkmalen zur Steuerung der optischen Veränderungsvorrichtungen unabhängig an die Elektroden angelegt werden.

15. Verfahren zur Herstellung einer optischen Veränderungsvorrichtung nach einem der Ansprüche 1 bis 9, **dadurch gekennzeichnet, dass** es die folgenden Schritte aufweist:
- Bereitstellung von zwei durchsichtigen Substraten,
- Aufbringen auf jedes Substrat einer Metallschicht, die eine erste bzw. eine zweite Elektrode bildet, wobei jede Elektrode eine eine im Wesentlichen kreisförmige optische Apertur (322) bildende Öffnung begrenzt,
- gleiche und gegenüberliegende Aufteilung jeder der ersten und zweiten Elektroden in mehrere Teilelektroden durch klassisches Ätzen,
- Aufbringen einer die von jeder Elektrode begrenzte optische Apertur (322) füllenden Materialschicht (326, 328) auf die Substrate (314, 316) durch Zentrifugieren, Zerstäuben oder Drucken, wobei das Material einen Flächenwiderstand zwischen 10kΩ/Quadrat und 10GΩ/Quadrat aufweist,
- Begrenzen jeder Apertur (322) durch einen Widerstandsring (34, 36),
- Trocknen der Substrate (314, 316) bei 100°C, vorzugsweise im Trockenofen,
- Durchführen einer planaren oder homöotropen Verankerungsbearbeitung,
- Anordnen von Klebern und Abstandsscheiben um die optische Apertur (322) des ersten Substrats (314),
- Überlagerung des zweiten Substrats (316) derart, dass die optischen Aperturen (322) einander gegenüber angeordnet sind,
- Versiegeln der Vorrichtung (10) durch Härten des Klebers durch Polymerisation oder Trocknen im Trockenofen,
- Einfügen eines Flüssigkristallelements (12) zwischen die zwei Substrate (314, 316) durch Kapillarwirkung oder durch Ansaugen unter Luftvakuum,
- Einsetzen eines linearen Polarisators am Eingang oder am Ausgang der Vorrichtung, der im Fall einer planaren Verarbeitung parallel zur Verankerungsrichtung ausgerichtet ist.

## Claims

1. Optically variable device (10) allowing the propagation of light to be controlled, comprising:
- a liquid-crystal element (312) having optical properties controlling the propagation of light;
- two substrate plates (314, 316) placed on either side of the liquid-crystal element (312), the two substrate plates (314, 316) being covered with a first and a second control electrode, respectively, each electrode bounding an orifice forming a substantially circular optical aperture (322);
the device furthermore comprising a layer of a material (326, 328) filling the optical aperture (322) bounded by each electrode,
the material having a sheet resistance uniform in the layer and of between 10 kΩ/□ and 10 GΩ/□, the device being **characterized in that** the first electrode and the second electrode are identically divided into a number of facing portions forming subelectrodes (318a, 318b, 318c, 318d, 320a, 320b, 320c, 320d) suited to receiving different potentials at the same time, and **in that** on each substrate plate (314, 316) a resistive ring (34, 36) bounds the optical aperture and is controlled by the subelectrodes.

2. Optically variable device according to the preceding claim, in which the material has a sheet resistance, uniform in the layer of said material, higher than 10 MΩ/□.

3. Optically variable device according to the preceding claim, in which the layer of material (326, 328) filling the optical aperture (322) is composed of a mixture of poly(3,4-ethylene dioxythiophene), poly(styrene sulfonate) and polyvinyl alcohol.

4. Optically variable device according to one of the preceding claims, in which the subelectrodes are bounded by axes that open onto the circumference of the optical aperture so as to bound between them circular arcs of substantially the same length.

5. Optically variable device according to one of the preceding claims, in which the subelectrodes are thin metal electrodes (318a to 318d, 320a to 320d) that are substantially strip shaped.

6. Optically variable device according to Claim 5, in which the first and second electrodes each consist of a number of thin metal subelectrodes (318a to 318d, 320a to 320d) connected, at one end, to the resistive ring (34, 36) and, at the other end, opening onto one of the edges of the substrate plate (314, 316).

7. Optically variable device according to Claim 3 and one of claims 4 to 6, in which the material (326, 328) furthermore comprises a sheet-resistance-promoting agent, such as ethylene glycol or dimethylformamide, so as to increase the sheet resistance of the material.

8. Optically variable device according to one of the preceding claims, in which the material (326, 328) comprises an adhesion-promoting agent, such as tetraethoxysilane, so as to improve the adherence of the material to the substrates.

9. Optically variable device according to one of the preceding claims, which device comprises an anchoring layer made of a material that anchors the liquid-crystal element (312) in a planar position, thus defining a planar anchoring direction parallel to the substrates (314, 316), or a homeotropic position.

10. Optical assembly (30) **characterized in that** it comprises two optically variable devices (10a, 10b) according to the preceding claim, stacked one on top of the other so that their planar anchoring directions are perpendicular.

11. Optical assembly (30) **characterized in that** it comprises two optically variable devices (10a, 10b) according to Claim 9, stacked one on top of the other so that their planar anchoring directions are parallel.

12. Optical assembly **characterized in that** it comprises a number of optically variable devices according to one of Claims 1 to 8, arranged in a planar array.

13. Use of an optical assembly according to either one of Claims 11 and 12, in which signals having the same amplitude and frequency characteristics are simultaneously applied to the electrodes so as to control the optically variable devices.

14. Use of an optical assembly according to either one of Claims 11 and 12, in which signals having different amplitude, phase and frequency characteristics are independently applied to the electrodes so as to control the optically variable devices.

15. Process for manufacturing an optically variable device according to one of Claims 1 to 9, **characterized in that** it comprises the following steps:
- providing two transparent substrates;
- depositing, on each substrate, a metal layer, forming a first and second electrode, respectively, each electrode bounding an orifice forming a substantially circular optical aperture (322);
- dividing each of the first and second electrodes identically into a plurality of mutually facing subelectrodes by conventional etching;
- depositing a layer of a material (326, 328) filling the optical aperture (322) bounded by each electrode on the substrates (314, 316) by spin-coating, spraying or printing, the material having a sheet resistance of between 10 kΩ/□ and 10 GΩ/□;
- bounding each aperture (322) with a resistive ring (34, 36);
- drying the substrates (314, 316) at 100°C, preferably in an oven;
- carrying out a planar or homeotropic anchoring treatment;
- placing adhesives and spacers around the optical aperture (322) of the first substrate (314);
- superposing the second substrate (316) so that the optical apertures (322) are placed mutually facing;
- sealing the device (10) by setting the adhesive either by curing it or by drying it in an oven;
- inserting a liquid-crystal element (12) between the two substrates (314, 316) by capillary action or suction; and
- fitting a linear polarizer at the entrance or exit of the device, the polarizer being oriented parallel to the anchoring direction in the case of a planar treatment.
